# FASCICULE DE BREVET EUROPEEN

(11) **EP 2 910 433 B1**
(45) Date de publication et mention de la délivrance du brevet: **23.11.2016**
(21) Numéro de dépôt: 15152207.5
(22) Date de dépôt: 22.01.2015
(51) Int. Cl.: B60R 21/214, B60R 21/2165

(54) **Garniture de pavillon de toit pour déploiement de coussin gonflable**
Dachhimmel angepasst für Airbag-Auslösung
Ceiling trim adapted for airbag deployment

(30) Priorité: 21.02.2014 FR 1451403
(43) Date de publication de la demande: 26.08.2015
(73) Titulaire: PEUGEOT CITROËN AUTOMOBILES SA, 78140 Vélizy-Villacoublay (FR)
(72) Inventeur: VILLA, LAURENT, 91460 MARCOUSSIS (FR); PARODY, BRUNO, 78210 SAINT-CYR L'ECOLE (FR)

(56) Documents cités:
- WO-A1-2007/014581
- WO-A2-03/104033
- US-A1- 2009 295 131

## Description

L'invention a trait au domaine des véhicules automobiles équipés d'un dispositif de coussin gonflable logé sur le toit. Plus particulièrement l'invention a trait à la réalisation d'un véhicule avec un dispositif de coussin gonflable disposé sur le toit, en haut du pare-brise et se déployant vers l'avant et vers le bas. L'invention a trait, plus particulièrement encore, à la réalisation d'une garniture de pavillon de toit d'un tel véhicule.

La réalisation d'un véhicule automobile avec un dispositif de coussin gonflable logé sur le toit est connue. Un tel dispositif est généralement réalisé pour la protection du conducteur et/ou du passager, il est précisément destiné à protéger au mieux une personne lors d'une collision du véhicule. Dans le cas d'une collision frontale, qui est celle généralement prioritaire pour laquelle le véhicule est ainsi réalisé, le torse et la tête de la personne sont les parties du corps qu'un coussin déployé est apte à protéger. Pour ce faire une cartouche de gaz comprimé est libérée de manière à gonfler le coussin quasi instantanément et le déployer en avant de la personne. La forme du déploiement final d'un tel coussin est obtenue principalement par la géométrie qui lui est donnée, et il peut être optimisé selon l'habitacle et les équipements intérieurs. La dynamique d'ouverture du coussin gonflable et les effets qui y sont liés sont des critères importants de sa réalisation, il est recherché par exemple qu'une telle ouverture jusqu'au déploiement ne génère pas de risques supplémentaires de blessure pour le passager et qu'elle soit répétable. Or il est aussi connu de loger le dispositif de manière à ce qu'il ne soit pas visible, par exemple derrière la garniture de toit, celle-ci étant généralement à proximité de la tête du conducteur. La garniture est un élément décoratif du toit, d'autres éléments fonctionnels peuvent aussi être réalisés sur le toit, par exemple des pare-soleils ou des dispositifs de commandes ou d'éclairage. Il est connu que des éclairages ou autres dispositifs de commande peuvent être montés dans la garniture via des consoles ou des boitiers fixés sur, ou plus généralement à travers, la garniture. Il est donc recherché de réaliser le dispositif de coussin gonflable de toit tout en s'accommodant de tels éléments fonctionnels ou décoratifs ainsi que leur moyens de fixation de manière à éviter de générer des risques supplémentaires de blessure pour le passager.

Le document de brevet publié US 2005/0040627A1 divulgue un véhicule comprenant un dispositif de coussin gonflable logé sur le toit en haut du pare-brise et au-dessus d'une garniture de toit, un pare-soleil se trouvant en dessous de la garniture. Le dispositif de coussin gonflable comprend un boîtier de section généralement en forme de U couché avec l'ouverture vers l'avant. La garniture ainsi que le pare-soleil sont montés sur le bord avant de la paroi inférieure du boîtier. La portion avant de la garniture est configurée pour plier vers le bas sous la pression du coussin lors de son déploiement. Cet enseignement est toutefois silencieux quant à la manière de favoriser ce mouvement. Le dispositif décrit est intéressant en ce qu'il permet le déploiement du coussin gonflable vers l'avant en franchissant la barrière formée par la garniture. Il présente toutefois l'inconvénient que la paroi inférieure à la laquelle le pare-soleil est fixé est susceptible de plier vers le bas lors du déploiement du coussin et, partant, de déplacer le pare-soleil. Ceci est d'autant plus vrai que la portion avant de la garniture est rigide, notamment au niveau de la ligne de pivotement. Le déplacement du pare-soleil est susceptible de blesser le passager du véhicule assis à l'avant du véhicule.

Le document de brevet publié FR 2809692 divulgue un masquage d'un coussin gonflable de sécurité dans une planche de bord. La paroi rigide de la planche de bord est entièrement coupée de manière à ce qu'un volet de la planche de bord s'ouvre sous la pression d'avant en arrière d'un coussin gonflable. Cette solution est intéressante dans le principe pour éliminer la résistance d'une barrière qui doit s'ouvrir. Elle n'est toutefois pas applicable généralement dans une garniture de toit en raison de la perte de rigidité qu'elle génère. Ceci est d'autant plus vrai pour sa réalisation dans une partie avant de la garniture supportant des équipements fonctionnels.

Le document US 2009/0295131 A1 divulgue une garniture de pavillon de toit d'apres le préambule de la revendication 1.

L'invention a pour objectif de faciliter la réalisation d'un dispositif de coussin gonflable de toit. Plus particulièrement l'invention a pour objectif de faciliter le déploiement vers l'avant et vers le bas d'un tel dispositif sans générer de risques supplémentaires de blessure pour le passager. Plus particulièrement encore, l'invention a pour objectif d'éviter un effacement aléatoire de la garniture lors du déploiement d'un coussin gonflable situé au-dessus de la garniture en question. L'invention a pour objet une garniture de pavillon de toit de véhicule automobile, comprenant un panneau destiné à épouser la face intérieure du toit, ledit panneau comprenant : un ajour central avant de fixation d'une console de commande et ; un bandeau de liaison transversale entre deux portions du panneau latérales à l'ajour, ledit bandeau étant devant l'ajour ; remarquable en ce que, le bandeau de liaison comprend une section pré coupée configurée pour se rompre en cas de déploiement vers le pare-brise d'au moins un coussin gonflable logé au niveau d'une des portions latérales entre la garniture et le toit, ladite section pré coupée s'étendant dans une direction majoritairement longitudinale, préférentiellement du bord avant jusqu'au bord arrière dudit bandeau.

Une section pré coupée du bandeau est une section de moindre résistance mécanique, ladite moindre résistance étant obtenue par une entaille partielle dans une section du bandeau.

Selon un mode avantageux de l'invention, la section pré coupée a une surface de moins de 80%, préférentiellement moins de 50%, encore plus préférentiellement moins de 30% de la surface d'une section directement adjacente à ladite section pré coupée.

Selon un mode avantageux de l'invention, la section pré coupée s'étend alternativement entre des fentes traversant totalement, préférentiellement partiellement le bandeau.

Selon un mode avantageux de l'invention, la section pré coupée s'étend le long d'une fente continue dans la face supérieure du bandeau.

Avantageusement, le panneau est formé de plusieurs couches de matériaux dont au moins deux sont rigides. La résistance au cisaillement d'au moins une couche rigide est de plus de 200 MPa.

Avantageusement, une couche rigide du panneau est fendue au niveau de la section pré coupée.

Avantageusement, le panneau est d'une épaisseur comprise entre 8mm et 25mm.

Avantageusement, la section pré coupée est d'une longueur allant jusqu' à 60mm.

Selon un mode avantageux de l'invention, le bandeau comprend un orifice de centrage de la console, la section pré coupée s'étendant vers l'arrière, dans une bordure du bandeau contournant l'arrière dudit orifice, et/ou vers l'avant, dudit orifice.

Selon un mode avantageux de l'invention, la bordure comprend une encoche arrière débouchant dans l'orifice, ladite encoche arrière étant préférentiellement en forme de V.

Selon un mode avantageux de l'invention, la section pré coupée s'étend du coin d'un angle intérieur formé au pied de la bordure du bandeau, ledit angle étant de moins de 120°, préférentiellement de moins de 90°.

Selon un mode avantageux de l'invention, le bandeau comprend, en outre, au milieu de son bord avant, une encoche, préférentiellement de forme arrondie, la section pré coupée s'étendant à partir de ladite encoche, ladite encoche étant apte à réduire la distance de la section pré coupée.

Avantageusement, l'encoche s'étend dans le bandeau sur 5mm.

Avantageusement, le bandeau est courbé autour d'une direction transversale.

Selon un mode avantageux de l'invention, au moins une des portions latérales du panneau comprend deux orifices de fixation du panneau, et préférentiellement d'un pare-soleil, lesdits orifices étant positionnés sur chacun des côtés de ladite portion, à une distance des côtés de moins de 20%, préférentiellement 10%, de la largeur de ladite portion.

L'invention a également pour objet un procédé de mise à forme par thermoformage d'une garniture de toit de véhicule automobile, remarquable en ce que la garniture est conforme à l'invention.

Avantageusement, la section pré coupée est réalisée pendant la mise à forme par une ou plusieurs lames mécaniques.

Selon un mode avantageux de l'invention, au moins une encoche est réalisée par découpe au laser ou par découpe au jet d'eau.

L'invention a également pour objet un véhicule automobile comprenant un pare-brise, un toit, une garniture de pavillon de toit, et un dispositif de coussin gonflable disposé entre la garniture et le toit en haut du pare-brise, le dispositif de coussin gonflable étant configuré pour se déployer essentiellement vers l'avant et vers le bas, devant le conducteur ou le passager avant du véhicule, remarquable en ce que la garniture de toit est conforme à l'invention.

Selon un mode avantageux de l'invention, le panneau est fixé via ses orifices de fixation à des pattes de toit de part et d'autre du dispositif de coussin gonflable, le bord avant du panneau étant préférentiellement libre.

Selon un mode avantageux de l'invention, les pattes de toit s'étendent essentiellement longitudinalement, le dispositif de coussin gonflable étant préférentiellement fixé auxdites pattes.

Selon un mode avantageux de l'invention, le véhicule comprend, en outre, une console de commande fixé dans l'ajour, le bord avant de la console couvrant le bandeau partiellement ou totalement.

Avantageusement, la console de commande est fixée à la périphérie de l'ajour par des moyens de fixation tel des clips.

Avantageusement, la console comprend un moyen de centrage dans l'orifice de centrage du bandeau.

Les mesures de l'invention sont intéressantes en ce qu'elles permettent au dispositif de coussin gonflable de s'ouvrir vers l'avant en franchissant la garniture, celle-ci s'ouvrant de manière contrôlée en avant de la personne à protéger sans générer de risques supplémentaires de blessure pour la personne. En effet, l'effacement de la garniture pour octroyer le passage du coussin gonflable est guidé par la rupture systématique dans le bandeau avant central de garniture.

D'autres caractéristiques et avantages de la présente invention seront mieux compris à l'aide de la description de réalisations exemplaires et des dessins parmi lesquels :
- La figure 1 est une illustration de la partie avant droite de l'habitacle d'un véhicule automobile en situation de collision avant, le véhicule étant conforme à l'invention, un passager étant en position contre un coussin gonflable en position déployée, une console de commande étant située au centre et en avant du toit.
- La figure 2 est une vue de dessous du toit du véhicule de la figure 1, le toit étant représenté sans console de commande.
- La figure 3 est une vue de dessus du panneau de la garniture des figures 1 et 2 ;
- La figure 4 est une vue agrandie de la section pré coupée du panneau de la figure 3 ;
- La figure 5 est une illustration de la section pré coupée de la figure 4 selon un premier mode de réalisation;
- La figure 6 est une illustration de la section pré coupée de la figure 4 selon un deuxième mode de réalisation.
- La figure 7 est une vue en perspective à partir d'une coupe longitudinale du toit de la figure 1, au niveau de la console de commande.

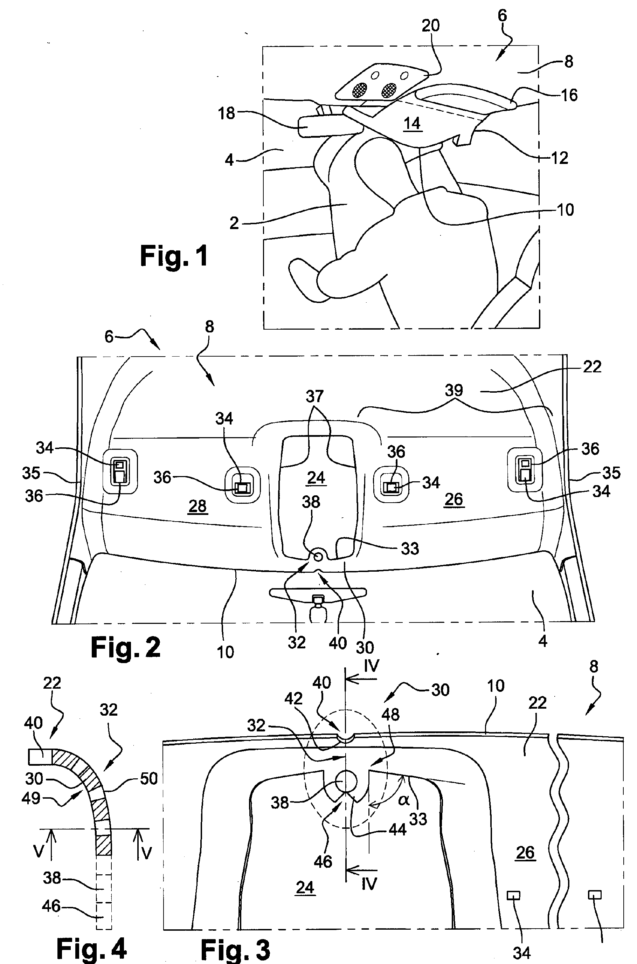

La figure 1 illustre une mise en situation dans un habitacle d'une collision frontale d'un véhicule automobile, un passager avant étant en position contre un coussin gonflable 2 déployé. On voit aussi un pare-brise 4, un toit 6, une garniture de pavillon de toit 8, le coussin gonflable 2 parti du toit 6 est essentiellement déployé vers l'avant et vers le bas, devant le passager de manière à le protéger. Pour arriver dans cette position, le coussin gonflable 2, libéré par de l'air pressurisé, a forcé une ouverture de la garniture de pavillon de toit 8. On peut observer sur l'image le bord avant 10 de la garniture déplacé vers le bas ainsi que les bords latéraux 12 du volet de garniture 14 dont l'ouverture a ainsi été forcée. En l'occurrence le véhicule comprend des équipements fonctionnels, par exemple, un pare-soleil 16 logé en arrière du volet de garniture 14 ; un rétroviseur 18 monté sur le pare-brise; une console 20 pour éclairage intérieur et/ou commande, ces équipements ne se voyant pas endommagés ou déplacés vers le passager lors du déploiement du coussin gonflable 2. La situation illustrée ci-avant pour le passager du véhicule peut aussi être celle du conducteur du véhicule, les éléments présentés plus haut se trouvant à l'avant droit de l'habitacle devenant référencés à l'avant gauche de l'habitacle.

La figure 2 est une vue de dessous du toit 6 du véhicule automobile conforme à l'invention, représenté néanmoins sans pare-soleil ni console centrale. La garniture de pavillon de toit 8 comprend un panneau 22 destiné à épouser la face intérieure du toit 6. Le panneau 22 comprend un ajour central avant 24 de fixation de la console et deux portions (26, 28) latérales à l'ajour 24. Les deux portions (26, 28) sont reliées entre elles. Plus précisément, le panneau 22 comprend un bandeau 30 de liaison transversale entre les deux portions latérales (26, 28), le bandeau 30 étant situé devant l'ajour 24. Le bandeau 30 comprend une section pré coupée 32 configurée pour se rompre en cas de déploiement vers le pare-brise 4 d'au moins un coussin gonflable logé au niveau d'une des portions latérales (28, 30) entre la garniture 8 et le toit 6. La section pré coupée 32 s'étend dans une direction majoritairement longitudinale. Selon un mode préféré de l'invention, la section pré coupée s'étend du bord avant 10 du panneau jusqu'au bord arrière 33 du bandeau.

Le panneau 22 comprend aussi, sur au moins une portion latérale (26, 28) en l'occurrence sur les deux portions, des orifices de fixation 34, ceux-ci pouvant aussi être ceux de fixation d'un pare-soleil. Le panneau 22 est fixé via ses orifices de fixation 34 à des pattes de toit 36, celles-ci étant situées dans un mode préféré de réalisation de part et d'autre d'au moins un dispositif de coussin gonflable. Plus précisément, les orifices 34 sont positionnés sur les côtés (35, 37) de la portion (26, 28), à une distance des côtés (35, 37) de moins de 20% de la largeur 39 de la portion (26, 28), ils peuvent aussi être à une distance de moins de 10% de cette largeur 39. Le volet vu en relation avec la figure 1 est situé à l'avant de la portion (26, 28). Cette mesure est intéressante en ce que l'arrière de la portion (26, 28) est solidement fixée au toit via les orifices 34, les efforts d'ouverture contre la portion (26, 28) générés au début du déploiement du coussin gonflable pouvant ainsi se concentrer sur l'avant de la portion (26, 28), le bandeau 30 de liaison entre les portions latérales subissant principalement ces efforts vers l'avant. Plus précisément, le bandeau 30 s'étendant dans la direction transversale, subit en traction ces efforts de poussée, la rupture pouvant ainsi se faire systématiquement dans la section pré coupée qui est majoritairement perpendiculaire à la direction de traction. Le bord avant 10 de la portion (26, 28), en l'occurrence est libre, il peut aussi être maintenu au toit 6 ou au pare-brise 4.

La figure 2 illustre également un orifice 38 de centrage de la console situé de manière optionnelle dans le bandeau 30. Dans un mode préféré de l'invention, la section pré coupée 32 du bandeau 30 s'étend vers l'arrière et/ou vers l'avant dudit orifice 38. Le bandeau 30 peut comprendre, en outre, au milieu de son bord avant 10, une encoche avant 40, la section pré coupée 32 du bandeau 30 s'étendant à partir de l'encoche 40. L'encoche avant 40 offre un point de fragilisation central dans le bord avant 10 du panneau 22 de manière à ce que la rupture du bandeau 30 puisse se produire au niveau de cette encoche avant 40. Cette mesure est intéressante en ce qu'elle favorise une dynamique similaire d'ouverture de la portion latérale de droite (26) ou bien de la portion latérale de gauche (28). Conceptuellement, on pourra regrouper la section pré coupée 32 et l'encoche 40 sous le terme de moyens de rupture préprogrammée de la garniture.

La figure 3 est une vue du dessus du panneau 22 conforme à l'invention. Sur la partie droite de l'image, on peut voir la portion 26 du panneau 22 latérale à l'ajour 24, celle-ci comprenant les orifices de fixation 34. Sur la partie centrale de l'image, on peut voir le bandeau 30 comprenant la section pré coupée 32 et l'orifice 38 de centrage de la console. Une bordure 44 du bandeau 30 contourne l'arrière de l'orifice 38, cette bordure comprenant dans un mode préféré de l'invention une encoche arrière 46. L'encoche arrière 46 est débouchant dans l'orifice 38, elle peut être en forme de V. Dans un mode de réalisation, le bord arrière 33 du bandeau 30 forme un angle intérieur α au pied de la bordure 44 du bandeau 30, la section pré coupée 32 s'étendant du coin 48 de l'angle α. L'angle α est de moins de 120°, il peut être de moins de 90°. On peut enfin voir l'encoche avant 40 sur le bord avant 10 du panneau 22, celle-ci pouvant s'étendre dans le panneau sur 5mm. Dans un mode préféré de réalisation l'encoche 40 a une forme arrondie 42. Conceptuellement, on pourra regrouper la section pré coupée 32, l'encoche avant 40 et l'encoche arrière 46 sous le terme de moyens de rupture préprogrammée de la garniture.

La figure 4 est une vue en coupe agrandie de la section pré coupée 32 du bandeau 30, la coupe étant en l'occurrence longitudinale et au milieu du panneau 22. On peut voir de haut en bas sur la coupe, l'encoche avant 40, la section pré coupée 32, l'orifice de centrage 38 et l'encoche arrière 46. La section pré coupée 32 a une surface 49 de moins de 80% de la surface d'une section du même panneau, non pré coupée, et directement adjacente à ladite section pré coupée 32. La surface 49 peut aussi être de moins de 50%, elle peut aussi être de moins de 30% de la surface de la section directement adjacente. Le panneau 22 est d'une épaisseur comprise entre 8mm et 25mm, la section pré coupée est réalisée sur une longueur pouvant aller jusqu'à 60mm. La figure 4 illustre un premier mode de réalisation, la section pré coupée du bandeau s'étendant entre des fentes 50 traversant totalement le bandeau. Alternativement, les fentes 50 peuvent être partiellement traversant.

Le panneau 22 conforme à l'invention est habituellement mis à forme par thermoformage, la section pré coupée 32 étant réalisée pendant la mise à forme par une ou plusieurs lames mécaniques. La section pré coupée peut aussi être réalisée dans une étape ultérieure audit procédé. Les encoches avant 40 et/ou arrière 46 peuvent être réalisées par découpe au laser ou par découpe au jet d'eau.

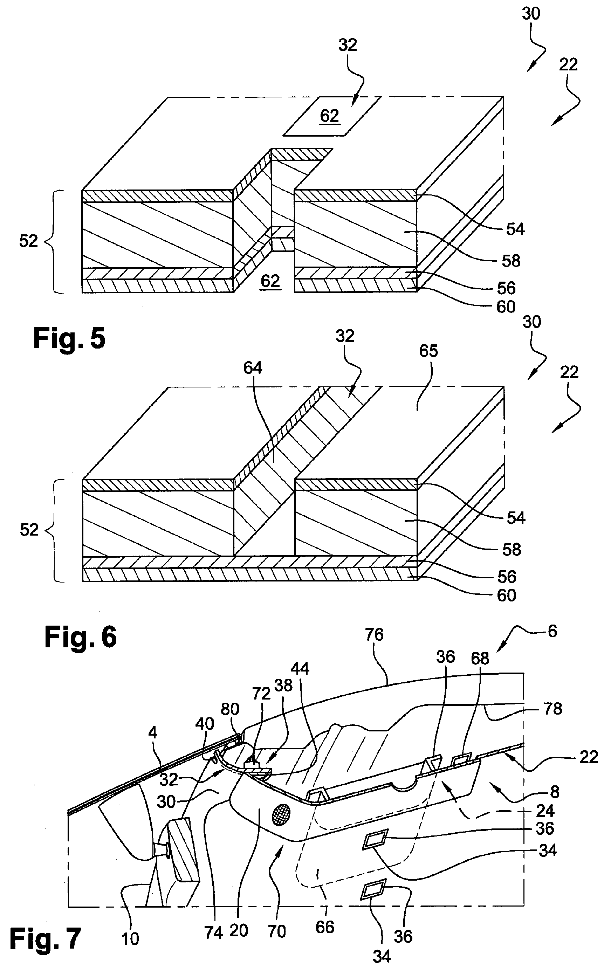

Les figures 5 et 6 sont des vues en coupe transversale du bandeau 30 au niveau de la section pré coupée 32, la figure 5 illustrant le premier mode de réalisation de la section pré coupée 32 du bandeau 30 vue en relation avec la figure 4 ; La figure 6 illustre un deuxième mode de réalisation de la section pré coupée 32. Dans ces deux modes de réalisation, le panneau est formé de préférence de plusieurs couches 52 de matériaux. Deux couches (54, 56) au moins du panneau 10 sont rigides, elles assurent en effet la rigidité de l'ensemble du panneau 22. Le matériau des couches rigides (54, 56) offre une résistance au cisaillement de plus de 200 MPa, un tel matériau peut être sélectionné par l'homme du métier, à titre d'exemple les couches (54, 56) peuvent être en fibre de verre. Une couche 58 entre les épaisseurs rigides peut être en mousse thermoplastique. La couche inférieure 60 est en feutre ou en tissu, ce qui permet d'assurer l'aspect esthétique de la surface du panneau visible à l'intérieur de l'habitacle du véhicule.

La figure 5 illustre un premier mode de réalisation de la section pré coupée 32 du bandeau 30. La section pré coupée 32 s'étend alternativement entre des fentes 62 traversant totalement le bandeau 30. Les fentes 62 peuvent aussi traverser partiellement le bandeau. Les fentes 62 sont agrandies sur l'image pour améliorer la visibilité, elles peuvent être réalisées sur un millimètre de largeur ou moins d'un millimètre.

La figure 6 illustre un deuxième mode de réalisation de la section pré coupée 32. La section pré coupée 32 s'étend le long d'une fente continue 64 dans la face supérieure 65 du bandeau 30. La couche supérieure 54 rigide du panneau est ainsi fendue au niveau de la section pré coupée 32, la couche inférieure 56 permettant de garder la rigidité à ce niveau. La fente peut avoir une profondeur traversant plusieurs couches à condition de maintenir le niveau de rigidité requis pour le panneau 22 au niveau du bandeau 30.

La figure 7 est une vue en perspective à partir d'une section longitudinale du toit 6 d'un véhicule automobile conforme à l'invention. Le véhicule comprend un pare-brise 4, un toit 6, une garniture de pavillon de toit 8, et un dispositif de coussin gonflable 66 disposé entre la garniture et le toit en haut du pare-brise, le dispositif de coussin gonflable 66 étant configuré pour se déployer essentiellement vers l'avant et vers le bas, devant le conducteur ou le passager avant du véhicule. Les pattes de toit 36 et les orifices de fixation 34 du panneau 22 aux pattes, comme vu en relation avec la figure 1, sont représentées. Dans un mode de réalisation, le dispositif de coussin gonflable peut être également fixé aux pattes 36, celles-ci s'étendant alors longitudinalement de manière à laisser la face avant du dispositif 66 libre pour le passage du coussin. Le véhicule comprend, en outre, une console de commande 20 fixée dans l'ajour central 24. La console 20 peut être fixée sur la périphérie de l'ajour 24 par des moyens de fixation tel des clips 68. La partie avant 70 de la console 20 comprend un moyen de centrage 72 logé dans l'orifice de centrage 38 du bandeau 30. Le bord avant 74 de la console 20 peut couvrir visuellement partiellement le bandeau 30, il peut aussi le couvrir totalement. En l'occurrence, le bord avant 74 de la console couvre le bandeau sur une distance suffisante de manière à masquer l'angle intérieur au bord de la bordure 44 contournant l'arrière de l'orifice 38 comme vue plus haut en relation avec la figure 3.

Le toit 6 comprend une couverture 76 et une traverse 78 fixée à la couverture sur son bord avant via une feuillure 80. Le pare-brise 4 est collé à la couverture via la face opposé à la feuillure 80. Le bord avant 10 du panneau 22 est libre en avant de la feuillure 80. Le bandeau forme une courbure selon un axe transversal, le bord avant 10 remontant vers le haut en direction du pare-brise 4. Cette mesure permet, en l'occurrence, de rendre l'encoche avant 40 dissimulée en arrière de la partie haute du pare-brise 4, celle-ci pouvant être opacifiée notamment par sérigraphie. La section pré coupée 32 du bandeau 30 est représentée par un trait en pointillé.

## Revendications

1. Garniture de pavillon de toit (8) de véhicule automobile, comprenant un panneau (22) destiné à épouser la face intérieure du toit (6), ledit panneau comprenant :
- un ajour central avant (24) de fixation d'une console de commande (20) ;
- un bandeau de liaison (30) transversale entre deux portions (26, 28) du panneau (22) latérales à l'ajour (24), ledit bandeau (30) étant devant l'ajour (24) ;
**caractérisée en,ce que**
le bandeau de liaison (30) comprend une section pré coupée (32) configurée pour se rompre en cas de déploiement vers le pare-brise (4) d'au moins un coussin gonflable (2) logé au niveau d'une des portions latérales (26, 28) entre la garniture (8) et le toit (6), ladite section pré coupée (32) s'étendant dans une direction majoritairement longitudinale, préférentiellement du bord avant (10) jusqu'au bord arrière (33) dudit bandeau.

2. Garniture (8) selon la revendication 1, **caractérisée en ce que** la section pré coupée (32) a une surface de moins de 80%, préférentiellement moins de 50%, encore plus préférentiellement moins de 30% de la surface d'une section directement adjacente à ladite section pré coupée (32).

3. Garniture (8) selon l'une des revendications 1 et 2, **caractérisée en ce que** le bandeau (30) comprend un orifice de centrage (38) de la console (20), la section pré coupée (32) s'étendant vers l'arrière, dans une bordure (44) du bandeau (30) contournant l'arrière dudit orifice (38), et/ou vers l'avant, dudit orifice (38).

4. Garniture (8) selon la revendication 3, **caractérisée en ce que** la bordure (44) comprend une encoche arrière (46) débouchant dans l'orifice (38), ladite encoche arrière (46) étant préférentiellement en forme de V.

5. Garniture (8) selon l'une des revendications 3 et 4, **caractérisée en ce que** la section pré coupée (32) s'étend du coin (48) d'un angle α intérieur formé au pied de la bordure (44) du bandeau (30), ledit angle α étant de moins de 120°, préférentiellement de moins de 90°.

6. Garniture (8) selon l'une des revendications 1 à 5, **caractérisée en ce que** le bandeau (30) comprend, en outre, au milieu de son bord avant (10), une encoche avant (40), préférentiellement de forme (42) arrondie, la section pré coupée (32) s'étendant à partir de ladite encoche avant (40), ladite encoche avant (40) étant apte à réduire la distance de la section pré coupée (32).

7. Garniture (8) selon l'une des revendications 1 à 6, **caractérisée en ce que** au moins une portion latérale (26, 28) comprend deux orifices de fixation (34) du panneau (22), et préférentiellement d'un pare-soleil (16), lesdits orifices étant positionnés sur chacun des côtés (35, 37) de ladite portion (26, 28), à une distance des côtés (35, 37) de moins de 20%, préférentiellement 10%, de la largeur (39) de ladite portion (26, 28).

8. Procédé de mise à forme par thermoformage d'une garniture (8) de pavillon de toit (6) de véhicule automobile **caractérisé en ce que** la garniture (8) est selon une des revendications 1 à 7, l'encoche avant (40) et/ou l'encoche arrière (46) étant préférentiellement réalisée(s) par découpe au laser ou par découpe au jet d'eau.

9. Véhicule automobile comprenant un pare-brise (4), un toit (6), une garniture de pavillon de toit (8), et un dispositif de coussin gonflable (66) disposé entre la garniture (8) et le toit (6) en haut du pare-brise (4), le dispositif de coussin gonflable (66) étant configuré pour se déployer essentiellement vers l'avant et vers le bas, devant le conducteur ou le passager avant du véhicule, **caractérisé en ce que** la garniture de pavillon de toit (8) est selon l'une des revendications 1 à 7.

10. Véhicule automobile selon la revendication 9, **caractérisé en ce que** la garniture (8) est conforme à la revendication 7, le panneau (22) étant fixé via ses orifices de fixation (34) à des pattes de toit (36) de part et d'autre du dispositif de coussin gonflable (66), le bord avant (10) du panneau (22) étant préférentiellement libre.

## Patentansprüche

1. Dachhimmelfutter (8) für Kraftfahrzeug, das eine Platte (22) umfasst, die dazu bestimmt ist, sich an die Innenseite des Dachs (6) zu legen, wobei die Platte Folgendes umfasst:
- eine zentrale vordere Öffnung (24) zum Befestigen einer Bedienkonsole (20);
- ein Querverbindungsband (30) zwischen zwei Abschnitten (26, 28) der Platte (22) seitlich von der Öffnung (24), wobei das Band (30) vor der Öffnung (24) liegt;
**dadurch gekennzeichnet, dass**
das Verbindungsband (30) einen vorgeschnittenen Abschnitt (32) umfasst, der ausgelegt ist, um bei einem Ausbreiten zu der Windschutzscheibe (4) mindestens eines aufblasbaren Kissens (2), das im Bereich einer der Seitentüren (26, 28) zwischen dem Futter (8) und dem Dach (6) aufgenommen ist, zu bersten, wobei sich der vorgeschnittene Abschnitt (32) in eine Richtung, die in der Hauptsache längs liegt, bevorzugt von dem vorderen Rand (10) bis zu dem hinteren Rand (33) des Bands erstreckt.

2. Futter (8) nach Anspruch 1, **dadurch gekennzeichnet, dass** der vorgeschnittene Abschnitt (32) eine Oberfläche von weniger als 80 %, bevorzugt weniger als 50 %, noch bevorzugter weniger als 30 % der Oberfläche eines Abschnitts, der direkt neben dem vorgeschnittenen Abschnitt (32) liegt, hat.

3. Futter (8) nach einem der Ansprüche 1 und 2, **dadurch gekennzeichnet, dass** das Band (30) eine Zentrierungsöffnung (38) der Konsole (20) umfasst, wobei sich der vorgeschnittene Abschnitt (32) nach hinten in eine Einfassung (44) des Bands (30) erstreckt, die die Rückseite der Öffnung (38) umgibt, und/oder von der Öffnung (38) nach vorn.

4. Futter (8) nach Anspruch 3, **dadurch gekennzeichnet, dass** die Einfassung (44) eine hintere Kerbe (46) umfasst, die in die Öffnung (38) mündet, wobei die hintere Kerbe (46) vorzugsweise V-förmig ist.

5. Futter (8) nach einem der Ansprüche 3 und 4, **dadurch gekennzeichnet, dass** sich der vorgeschnittene Abschnitt (32) von der Ecke (48) eines inneren Winkels α, der am Fuß der Einfassung (44) des Bands (30) gebildet ist, erstreckt, wobei der Winkel α weniger als 120°, bevorzugt weniger als 90° beträgt.

6. Futter (8) nach einem der Ansprüche 1 bis 5, **dadurch gekennzeichnet, dass** das Band (30) außerdem in der Mitte seines vorderen Rands (10) eine vordere Kerbe (40), die bevorzugt gerundete Form (42) hat, umfasst, wobei sich der vorgeschnittene Abschnitt (32) ausgehend von der vorderen Kerbe (40) erstreckt, wobei die vordere Kerbe (40) geeignet ist, um die Entfernung des vorgeschnittenen Abschnitts (32) zu verringern.

7. Futter (8) nach einem der Ansprüche 1 bis 6, **dadurch gekennzeichnet, dass** mindestens ein seitlicher Abschnitt (26, 28) zwei Befestigungsöffnungen (34) der Platte (22) umfasst, und bevorzugt eine Sonnenblende (16), wobei die Öffnungen auf jeder der Seiten (35, 37) des Abschnitts (26, 28) in einer Entfernung von den Seiten (35, 37) von weniger als 20 %, bevorzugt 10 %, der Breite (39) des Abschnitts (26, 28) positioniert sind.

8. Verfahren zum Wärmeformen eines Himmelfutters (8) eines Dachs (6) eines Kraftfahrzeugs, **dadurch gekennzeichnet, dass** das Futter (8) einem der Ansprüche 1 bis 7 entspricht, wobei die vordere Kerbe (40) und/oder die hintere Kerbe (46) bevorzugt durch Laserschneiden oder durch Wasserstrahlschneiden hergestellt wird/werden.

9. Kraftfahrzeug, das eine Windschutzscheibe (4), ein Dach (6), ein Dachhimmelfutter (8) und eine Vorrichtung mit aufblasbarem Kissen (66) umfasst, die zwischen dem Futter (8) und dem Dach (6) oberhalb der Windschutzscheibe (4) angeordnet ist, wobei die Vorrichtung mit aufblasbarem Kissen (66) ausgelegt ist, um sich im Wesentlichen nach vorn und nach unten vor dem Fahrer oder dem Beifahrer des Fahrzeugs auszubreiten, **dadurch gekennzeichnet, dass** das Dachhimmelfutter (8) einem der Ansprüche 1 bis 7 entspricht.

10. Kraftfahrzeug nach Anspruch 9, **dadurch gekennzeichnet, dass** das Futter (8) Anspruch 7 entspricht, wobei die Platte (22) über ihre Befestigungsöffnungen (34) an Dachpratzen (36) auf beiden Seiten der Vorrichtung mit aufblasbarem Kissen (66) befestigt ist, wobei der vordere Rand (10) der Platte (22) bevorzugt frei ist.

## Claims

1. A ceiling trim (8) of a motor vehicle, including a panel (22) intended to fit closely the interior face of the ceiling (6), said panel including:
- a front central opening (24) for fixing a control console (20);
- a transverse connecting strip (30) between two portions (26, 28) of the panel (22) lateral to the opening (24), said strip (30) being in front of the opening (24);
**characterized in that**
the connecting strip (30) includes a pre-cut section (32) configured to break in the case of deployment towards the windscreen (4) of at least one airbag (2) housed at the level of one of the lateral portions (26, 28) between the trim (8) and the ceiling (6), said pre-cut section (32) extending in a predominantly longitudinal direction, preferably from the front edge (10) to the rear edge (33) of said strip.

2. The trim (8) according to Claim 1, **characterized in that** the pre-cut section (32) has an area of less than 80%, preferably less than 50%, more preferably less than 30% of the area of a section directly adjacent to said pre-cut section (32).

3. The trim (8) according to one of Claims 1 and 2, **characterized in that** the strip (30) includes a centring orifice (38) of the console (20), the pre-cut section (32) extending towards the rear, in an edging (44) of the strip (30) encircling the rear of said orifice (38), and/or toward the front, of said orifice (38).

4. The trim (8) according to Claim 3, **characterized in that** the edging (44) includes a rear recess (46), opening in the orifice (38), said rear recess (46) being preferably V-shaped.

5. The trim (8) according to one of Claims 3 and 4, **characterized in that** the pre-cut section (32) extends from the corner (48) by an interior angle α formed at the foot of the edging (44) of the strip (30), said angle α being less than 120°, preferably less than 90°.

6. The trim (8) according to one of Claims 1 to 5, **characterized in that** the strip (30) includes, in addition, in the middle of its front edge (10), a front recess (40), preferably of rounded shape (42), the pre-cut section (32) extending from said front recess (40), said front recess (40) being able to reduce the distance of the pre-cut section (32).

7. The trim (8) according to one of Claims 1 to 6, **characterized in that** at least one lateral portion (26, 28) includes two fixing orifices (34) of the panel (22), and preferably of a windscreen (16), said orifices being positioned on each of the sides (35, 37) of said portion (26, 28), at a distance of the sides (35, 37) of less than 20%, preferably 10%, of the width (39) of said portion (26, 28).

8. A method for shaping by thermoforming of a ceiling (6) trim (8) of a motor vehicle, **characterized in that** the trim (8) is according to one of Claims 1 to 7, the front recess (40) and/or the rear recess (46) being preferably realized by laser cutting or by waterjet cutting.

9. A motor vehicle including a windscreen (4), a ceiling (6), a ceiling trim (8), and an airbag device (66) arranged between the trim (8) and the ceiling (6) at the top of the windscreen (4), the airbag device (66) being configured to deploy substantially towards the front and downwards, in front of the driver or the front passenger of the vehicle, **characterized in that** the ceiling trim (8) is according to one of Claims 1 to 7.

10. The motor vehicle according to Claim 9, **characterized in that** the trim (8) is according to Claim 7, the panel (22) being fixed via its fixing orifices (34) to ceiling lugs (36) on either side of the airbag device (66), the front edge (10) of the panel (22) being preferably free.
